# EUROPÄISCHE PATENTSCHRIFT

(11) **EP 1 216 866 B1**
(45) Veröffentlichungstag und Bekanntmachung des Hinweises auf die Patenterteilung: **26.01.2005**
(21) Anmeldenummer: 01126834.9
(22) Anmeldetag: 10.11.2001
(51) Int. Cl.: B60J 5/04

(54) **Leichtbautür für Kraftfahrzeuge**
Lightweight door for motor vehicles
Porte légère pour véhicules à moteur

(30) Priorität: 19.12.2000 DE 10063459
(43) Veröffentlichungstag der Anmeldung: 26.06.2002
(73) Patentinhaber: Wagon Automotive GmbH, 63857 Waldaschaff (DE)
(72) Erfinder: Hock, Michael, Dipl.-Ing., 63762 Grossostheim (DE); Hock, Jürgen, Dipl.-Ing., 62762 Grossostheim (DE); Marutschke, Stefan, 63110 Rodgau (DE); Huy, Voung, Dipl.-Ing., 63165 Mühlheim (DE)
(74) Vertreter: Gesthuysen, von Rohr & Eggert

(56) Entgegenhaltungen:
- EP-A- 0 997 331
- DE-A- 4 432 381
- DE-A- 19 616 788
- DE-A- 19 727 010
- DE-A- 19 925 521
- DE-A- 19 962 988

## Beschreibung

Die Erfindung betrifft, gemäß dem in DE 196 16788 A offenbarten Oberbegriff des Anpruchs 1, den Aufbau einer Leichtbautür für Kraftfahrzeuge, d. h. einer Rohbautür, die nach dem Lackierungsprozeß später mit weiteren Einbauten wie Fensterheber, Türinnenverkleidung etc. komplettiert wird.

Die Gestaltung von Türen für Kraftfahrzeuge wird von verschiedenen Anforderungen bestimmt. Das sind z. B. statische Steifigkeitsanforderungen, dynamische Steifigkeitsanforderungen sowie Anforderungen an Bauraum und Anordnung von Einbauteilen. Statische Steifigkeitsanforderungen sind beispielsweise die Anforderungen an den Fensterrahmen bezüglich Biegung und Torsion und die Anforderungen an die Tür insgesamt bezüglich Absenkung und Überdrückung. Dynamische Steifigkeitsanforderungen resultieren aus den Sicherheitsanforderungen bei Frontal- und Seitencrash und weiteren Anforderungen an den Insassenschutz. Die Raumanforderungen betreffen den praktikablen Einbau und Betrieb von Anbau- und Funktionsteilen in oder an der Tür, die Einhaltung von Freiräumen für Montagearbeiten, die Einhaltung von Mindestabständen zu beweglichen Teilen, die Abstandshaltung paralleler Flächen, insbesondere für Dichtungszwecke, die Aufteilung des Innenraums der Tür in Trockenraum und Feuchtraum etc..

Die zuvor aufgelisteten Anforderungen an Türen für Kraftfahrzeuge sind prinzipiell unabhängig davon, auf welche konstruktive Weise die Tür des Kraftfahrzeugs gestaltet wird.

Bislang ist Stahlblech das verbreitetste Rohmaterial für Kraftfahrzeugtüren. Bekannt ist die konventionelle Technik einer Vollstanztür in Schalentechnik. Diese besteht aus zwei Stanzschalen und Glaskanalrahmen, die miteinander verbunden werden, wobei an der Innenschale später Einbaukomponenten angebaut werden.

Ein weiteres konventionelles Türkonzept wird durch die Rahmentür repräsentiert. Die Rahmentür besteht aus einem rollprofilierten und streckgebogenen Fensterrahmen aus Stahl, der mit einem Türkasten verschweißt oder verschraubt ist. Der Türkasten selbst ist wiederum aus zwei Stanzschalen zusammengesetzt, die miteinander verbunden sind.

Hinsichtlich der Variantenbildung zweckmäßig ist eine Rahmentür mit einem im Türkasten verschweißten Fensterrahmen (Baukastensystemtür). Eine solche Stahltür für Kraftfahrzeuge ist beispielsweise aus der EP 0 476 351 A1 bekannt. Bei dieser Konstruktionsweise können für unterschiedliche Fahrzeugtypen einige gleiche Bauteile eingesetzt werden.

Es hat sich gezeigt, daß die zuvor erläuterte Baukastensystemtür auch aus Leichtmetall/Leichtmetallegierungen, insbesondere Aluminiumlegierungen hergestellt werden kann. Ein entsprechendes Beispiel, das den nächstkommenden Stand der Technik darstellt, ergibt sich aus der DE 196 16 788 A1. Die hier offenbarte Leichtbautür für Kraftfahrzeuge weist eine Türaußenbeplankung und einen Tragrahmen auf, wobei der Tragrahmen einen einen U-Schenkel bildenden Scharnierträger, einen den anderen U-Schenkel bildenden Schloßträger und einen den U-Steg bildenden Türboden aufweist. Der Scharnierträger und der Schloßträger sind als Gußteile aus einer Leichtmetallegierung, insbesondere einer Aluminiumlegierung hergestellt, während der diese verbindende Türboden als Strangpreßprofil, Stanzprofil oder Rollprofil aus einer Leichtmetallegierung, insbesondere einer Aluminiumlegierung, hergestellt ist. An der offenen Seite des U geschlossen wird der Tragrahmen durch äußere und innere Fensterschachtprofile, die gleichfalls als Aluminium-Strangpreßprofile ausgeführt sein können. Fensterführungsprofile und Scharnierverstärkungen komplettieren die Rahmenkonstruktion dieser Leichtbautür. Die Gestaltung des Scharnierträgers und des Schloßträgers als Leichtmetall-Gußteil erlaubt die Realisierung komplexer Formen, ist aber kostenaufwendig.

Bei der zuvor erläuterten, aus dem Stand der Technik bekannten Leichtbautür kann der die Fensterfläche umschließende, mit dem Türkasten dauerhaft verbundene Fensterrahmen als stranggepreßtes und gebogenes, insbesondere streckgebogenes Leichtmetallprofil ausgeführt sein (siehe auch die DE 40 08 111 A1). Dieser zunächst nicht verkleidete Fensterrahmen muß mit verschiedenen Anbauteilen versehen werden. Dazu gehören Dichtungen sowie eine innere Dachrahmenblende, die mit Clipsen oder mit Befestigungssteckern (dafür sind Bohrungen erforderlich) befestigt wird. Dazu gehören auch eine außen anzubringende Rahmenblende sowie eine Blende für die B-Säule.

Die Verwendung einer Vielzahl von Anbauteilen an und um die Fensterfläche einer Tür eines Kraftfahrzeugs erfordert einen hohen Montageaufwand. Die verschiedenen Anbauteile müssen aneinander angepaßt und sorgfältig montiert werden, wobei sich die Toleranzen der Einzelteile natürlich summieren können, was gelegentlich zu störend großen Spaltweiten führen kann und die Optik beeinträchtigt.

Bekannt ist ein Fensterrahmenmodul zur Herstellung von Kraftfahrzeugtüren (DE 197 27 010 A1), das auch drei Hauptbaugruppen aufgebaut ist, nämlich dem eigentlichen Fensterrahmen, einer der Türinnenseite zugewandten Rahmenblende, die am Fensterrahmen befestigt wird, und einem an dem Fensterrahmen anzuordnenden Dichtungsmodul. Dadurch wird die Anzahl der Anbauteile reduziert, der Aufwand für die Konstruktion ist allerdings immer noch erheblich. Der eigentliche Fensterrahmen besteht dabei nur teilweise aus einem stranggepreßten Leichtmetallprofil. Er umfaßt nämlich zwei Leichtmetall-Druckgußteile als Seitenteile bei A-Säule und B-Säule und einen diese Seitenteile oberseitig verbindenden Rahmenbogen, der dann ein stranggepreßtes und gebogenes Leichtmetallprofil ist. Dort im Dachbereich hat dieser Abschnitt des Fensterrahmens eine geschlossenen Hohlkammer, an der außen eine Aufsteckleiste für das Dichtungsmodul angeformt ist. In den senkrechten Abschnitten bei A-Säule und B-Säule findet man eine solche Hohlkammer nicht, sondern U-förmige Ausformungen.

Der Erfindung liegt das Problem zugrunde, die eingangs erläuterte Leichtbautür hinsichtlich der Gestaltung am Fensterrahmen zu optimieren. Dies löst die vorliegende Lehre mit den Merkmalen des Anspruchs 1. Damit werden konstruktiv die notwendigen Anbaumöglichkeiten am Fensterrahmen bereitgestellt, insbesondere auch unter Berücksichtigung der Anforderungen zur Anbringung eines Blendenmoduls. Der durchgehende Fensterrahmen gewinnt seine Steifigkeit durch die geschlossene Hohlkammer, an der sich dann die Aufnahmenut und/oder die Aufsteckleiste ausgeformt befinden. Darin ist dann als wesentliches Anbauteil das Blendenmodul außen angebracht.

Bevorzugte Ausgestaltungen und Weiterbildungen der grundlegenden Lehre der Erfindung sind Gegenstand der Unteransprüche.

Im folgenden wird die Erfindung anhand einer lediglich ein Ausführungsbeispiel darstellenden Zeichnung näher erläutert. In der Zeichnung zeigt
- Fig. 1: eine Sprengdarstellung einer erfindungsgemäßen Leichtbautür in der Ausführung als vordere Seitentür bei bereits fertiggestelltem Türkasten mit montiertem Fensterrahmen,
- Fig. 2: einen Schnitt aus Fig. 1 entlang der Linie II-II,
- Fig. 3: einen Schnitt aus Fig. 1 entlang der Linie III-III,
- Fig. 4: einen Schnitt aus Fig. 1 entlang der Linie IV-IV.

Die vorliegende Patentanmeldung steht im Zusammenhang mit einer zeitgleich eingereichten Patentanmeldung, die sich mit der Konstruktion einer Leichtbautür insgesamt, insbesondere im Bereich des Türkastens befaßt.

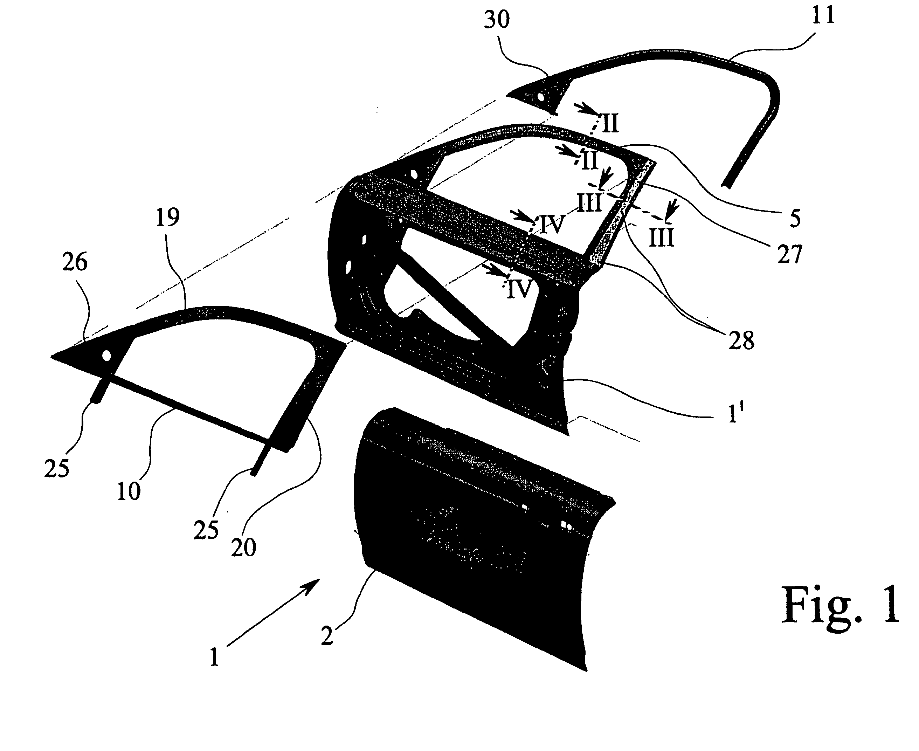

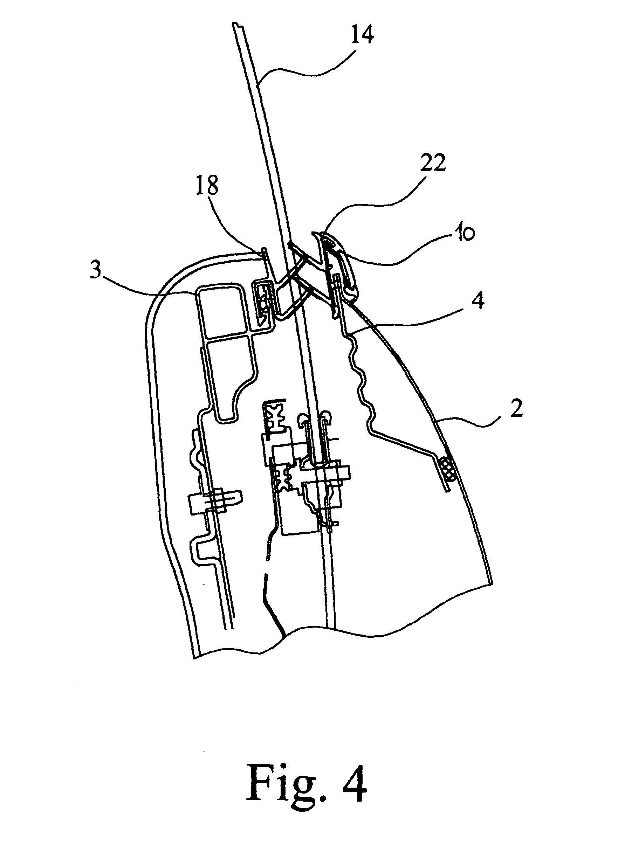

Fig. 1 zeigt als Beispiel einer Leichtbautür für ein Kraftfahrzeug eine vordere Seitentür, und zwar die Beifahrertür. Diese Leichtbautür für Kraftfahrzeuge weist zunächst einen Türkasten 1 auf. Für den Türkasten 1 ist im Rahmen der Lehre der vorliegenden Patentanmeldung zunächst nur von Bedeutung, daß er nach oben zur Fensterfläche hin durch innere und äußere Fensterschachtprofile 3, 4 (Fig. 4) begrenzt ist. Im Grundsatz kommen für die vorliegende Lehre also Türkästen 1 nach jedweder Bauart in Frage. Der dargestellt und insoweit bevorzugte Türkasten 1 des erläuterten Ausführungsbeispiels betrifft eine besonders leicht bauende Konstruktion, die einen im wesentlichen U-förmigen Tragrahmen 1' mit Scharnierträger, Schloßträger, Türboden und einem Teil des Türinnenblechs aufweist. Gegenstand der parallelen Patentanmeldung ist die Gestaltung dieses Tragrahmens 1' als einteiliges, aus einem Blech mit minimaler Blechdicke aus Leichtmetall/Leichtmetallegierungen hergestelltes Preßteil oder Tiefziehteil. An diesem ist die Türaußenbeplankung 2 angebracht.

Die Leichtbautür wird komplettiert mit einem die Fensterfläche umschließenden, mit dem Türkasten 1, insbesondere mit dem inneren Fensterschachtprofil 3 des Türkastens 1, dauerhaft verbundenen, nämlich insbesondere verschweißten Fensterrahmen 5 aus Leichtmetall/ Leichtmetallegierungen, insbesondere Aluminium/Aluminiumlegierungen. Der Fensterrahmen 5 ist in Fig. 1 bereits mit dem Türkasten 1 fest verbunden und bildet mit dem Türkasten 1 gemeinsam den Rohbau der Leichtbautür, an dem alle anderen Teile angebracht werden.

Der Fensterrahmen 5 ist als stranggepreßtes und gebogenes, insbesondere streckgebogenes Leichtmetallprofil ausgeführt. Der Fensterrahmen 5 ist vorzugsweise ein durchgehendes Profil, kann aber auch aus zwei Profilabschnitten zusammengesetzt sein. Man kann beispielsweise zwei gebogene Strangpreßprofile in der oberen, der B-Säule zugewandten Ecke zusammenlaufen lassen und auf Gehrung geschnitten verschweißen. Das ist gelegentlich erforderlich, wenn Designanforderungen nach einer dort scharf ausgebildeten Ecke verlangen.

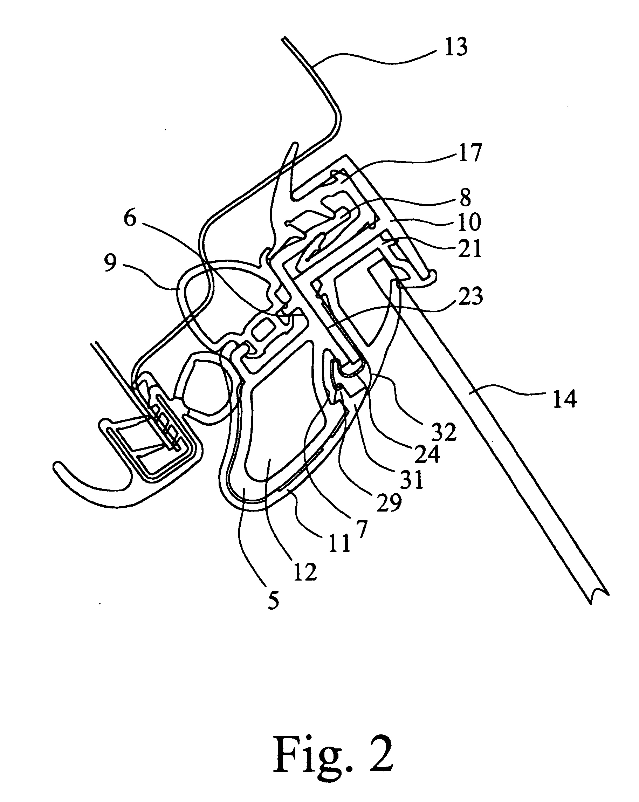

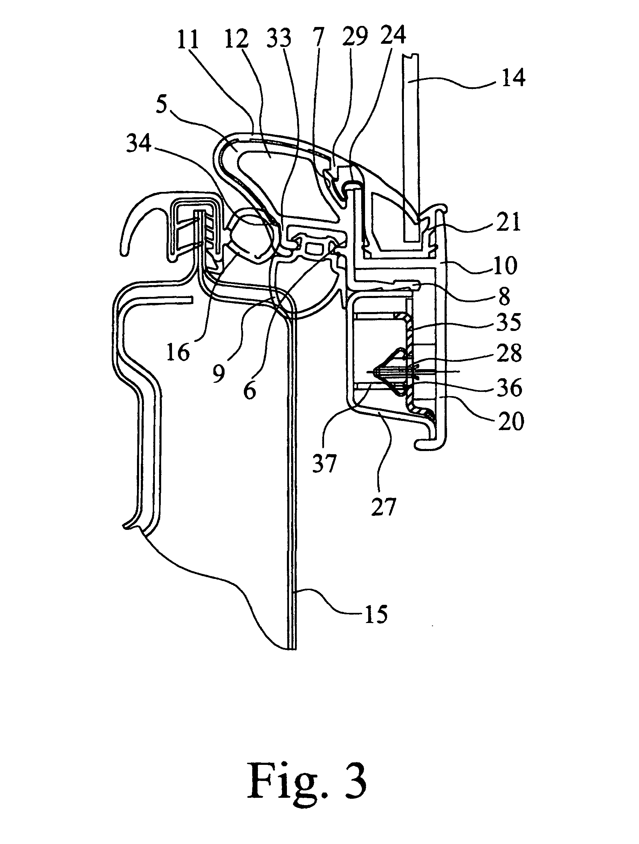

Den Querschnitt des Fensterrahmens 5 kann man anhand von Fig. 2 und Fig. 3 gut nachvollziehen. Die Lage der Schnitte gemäß Fig. 2 und Fig. 3 ist in Fig. 1 eingezeichnet. Es zeigt sich, daß der Querschnitt des stranggepreßten Leichtmetallprofils, das den Fensterrahmen 5 bildet, sich in seinem Verlauf nicht verändert. Die Längskontur weist nur insofern Querschnittsänderungen auf, als diese durch weitere Bearbeitungen, beispielsweise Ausklinkungen, nach dem Biegen herbeigeführt werden.

Wesentlich ist nun, daß an dem den Fensterrahmen 5 bildenden Leichtmetallprofil mindestens eine dem Profilverlauf folgende, im wesentlichen durchgehende Aufnahmenut 6; 7 und/oder mindestens eine dem Profilverlauf folgende, im wesentlichen durchgehende Aufsteckleiste 8 ausgebildet ist, die zur Aufnahme, Anbringung oder Anbindung eines Anbauteils 9; 10; 11; 27 dient.

Die Aufnahmenuten 6; 7 und die Aufsteckleiste 8 am Fensterrahmen 5 schaffen die Voraussetzungen dafür, daß die notwendigen Anbauteile schnell und problemlos ohne weitere Bohrungen o. dgl. am Fensterrahmen 5 angebracht werden können. Weiteres dazu später.

Die notwendige Verwindungssteifigkeit des Fensterrahmens 5 schafft das dargestellte Leichtmetallprofil durch eine geschlossene Hohlkammer 12, an der dann außen die Aufnahmenut 6; 7 und/oder die Aufsteckleiste 8 ausgebildet ist bzw. sind.

Das dargestellte und bevorzugte Ausführungsbeispiel zeigt in Fig. 2 angedeutet den Türrahmen 13 im Dachbereich sowie eine Fensterscheibe 14, in Fig. 3 die B-Säule 15 der Kraftfahrzeugkarosserie mit aufgesteckter karosserieseitiger Dichtung 16 und ebenfalls die Fensterscheibe 14. In Fig. 2 und Fig. 3 erkennt man, daß eine erste T-förmige Aufnahmenut 6 zur Anbringung einer türseitigen Hauptdichtung 9 als erstes Anbauteil vorgesehen ist. Die Dichtungen sind immer in entspanntem Zustand dargestellt, werden also durch die ebenfalls eingezeichnete, gegenüberliegende Dichtfläche in den dichtenden, elastisch verformten Zustand gebracht. Diese Erläuterung erleichtert das Verständnis der Darstellungen.

Eine weitere T-förmige Aufnahmenut 7 am Fensterrahmen 5 dient der Anbringung von Befestigungselementen von Anbauteilen 10; 11, die später noch im einzelnen erläutert werden. Diese zweite Aufnahmenut 7 ist im dargestellten Ausführungsbeispiel schräg gegenüber der ersten Aufnahmenut 6 am Hohlkammer-Profil 12 des Leichtmetallprofils angeordnet.

Fig. 2 läßt ferner erkennen, daß im dargestellten und bevorzugten Ausführungsbeispiel auf die weiter vorhandene Aufsteckleiste 8 eine zusätzliche Dichtung 17 aufgesteckt ist, die im Bereich des Dachrahmens 13 das Auftreten von Windgeräuschen sowie Wassereintritt verhindert.

Das dargestellte und bevorzugte Ausführungsbeispiel eines den Fensterrahmen 5 bildenden Leichtmetallprofils zeigt die Aufsteckleiste 8 etwa rechtwinklig abgewinkelt von der Aufnahmenut 6 für die Hauptdichtung 9, so daß sich ein vorzüglicher Freiraum für die Anordnung der Hauptdichtung 9 ebenso wie für die zusätzliche Dichtung 17 ergibt.

Fig. 3 zeigt überdies, daß die Aufsteckleiste 8 in diesem Bereich, also an der B-Säule 15, nicht mehr die Dichtung 17 trägt, sondern für einen anderen Zweck gebraucht wird, der später noch erläutert wird.

Fig. 1 macht in Verbindung mit Fig. 2 und Fig. 3 ferner deutlich, daß die Lehre der Erfindung mit einer besonderen weiteren Maßnahme perfektioniert werden kann, nämlich dadurch, daß als ein Anbauteil ein als Kunststoff-Formteil, insbesondere Kunststoff-Spritzgußteil, ausgeführtes Blendenmodul 10 von außen am Fensterrahmen 5 angebracht ist und daß im Blendenmodul 10 einstückig die äußeren Blenden 19; 20 am Dachrahmen 13 und an der B-Säule 15 ausgebildet sind und am Blendenmodul 10 zumindest eine Fensterführungsdichtung 21 angebracht ist. In beiden Figuren erkennt man die Fensterfuhrungsdichtung 21 zur Führung der Fensterscheibe 14 eingebettet in einer entsprechenden Aufnahme des Blendenmoduls 10.

Fig. 4 zeigt, daß am Blendenmodul 10 im dargestellten Ausführungsbeispiel auch die äußere Fensterschachtdichtung 22 angebracht ist. Überdies ist hier auch eine innere Fensterschachtdichtung 18 zu erkennen, die am inneren Fensterschachtprofil 3 angebracht ist.

Die Fig. 2 und 3 zeigen, daß das Blendenmodul 10, jedenfalls im umlaufenden Randbereich, im Querschnitt als ein U-Profil mit anschließendem L-Profil gestaltet ist. Das U-Profil bildet die Aufnahme für die Fensterführungsdichtung 21, das Profil bildet im Dachbereich die Aufnahme für die zusätzlich Dichtung 17 auf der Aufsteckleiste 8 des Fensterrahmens 5. Damit ist mittels des zusätzlichen L-Profils, das durch den Steg des U-Profils wiederum zu einem U-Profil komplettiert worden ist, die Befestigung des Blendenmoduls 10 durch Aufstecken im Dachbereich gewährleistet.

Zur Befestigung des Blendenmoduls 10 ist ferner vorgesehen, daß dieses zur Anbringung am Fensterrahmen 5 mit einer Abstützfläche 23 an einer Anlagefläche des den Fensterrahmen 5 bildenden Leichtmetallprofils anliegt und mit Hilfe einer Mehrzahl von mit Abstand voneinander angeordneter Spannklammern 24 in der Aufnahmenut 7 des Leichtmetallprofils befestigt ist. Dabei ist vorgesehen, daß die Spannklammern 24 als Metall-Federklammern ausgeführt sind, man erkennt diese Metall-Federklammern 24 gut in Fig. 2.

Fig. 1 zeigt schließlich noch, daß das Blendenmodul 10 mit in den Türkasten 1 einsteckbaren Verlängerungen der Fensterführungen 25 versehen ist, die im Türkasten 1 verankert werden.

In das Blendenmodul 10 ist im dargestellten Ausführungsbeispiel noch ein Spiegeldreieck 26 integriert.

Die Zusammenfassung einer Vielzahl von Blenden 19; 20; 26 und Dichtungen 21; 22 im Blendenmodul 10 läßt eine Vielzahl von Problemen entfallen, die im Stand der Technik mit der großen Zahl von anzubringenden Teilen verbunden waren. So kann man einfach das Blendenmodul 10, das im Regelfall eben aus Kunststoff besteht, mit den Verlängerungen der Fensterführungen 25 in den Türkasten einstecken, an den Fensterrahmen 5 ansetzen, durch Aufstecken auf die dichtungsbewehrte Aufsteckleiste 8 vorfixieren und mit den Spannklammern 24 endgültig am Leichtmetallprofil, das den Fensterrahmen 5 bildet, festlegen.

Im übrigen ist im dargestellten Ausführungsbeispiel, insbesondere erkennbar in Fig. 1 und Fig. 3, eine besondere Gestaltung des Fensterrahmens 5 dergestalt zu erkennen, daß der Fensterrahmen 5 an der der B-Säule 15 der Kraftfahrzeugkarosserie zugewandten Seite durch ein langgestrecktes Rahmenverstärkungsteil 27 verstärkt ist. Im dargestellten Ausführungsbeispiel ist vorgesehen, daß das Rahmenverstärkungsteil 27 als Preßteil oder Tiefziehteil aus Leichtmetall/Leichtmetallegierungen, insbesondere Aluminium/ Aluminiumlegierungen ausgeführt und mit dem Fensterrahmen 5 durch Schweißung fest verbunden ist. Zur Herstellung dieser Verbindung dient, wie Fig. 3 zeigt, die Aufsteckleiste 8 des Fensterrahmens 5 im Bereich der B-Säule 15. Sie bietet die Möglichkeit, entsprechende Schweißnähte oder Reihen von Schweißpunkten zu setzen. Anstelle von Schweißverbindungen sind auch andere Verbindungen wie Schrauben, Nieten, Kleben hier realisierbar, Schweißverbindungen werden aber im Normalfall eingesetzt werden.

Fig. 3 zeigt ferner eine Ausgestaltung der Befestigung im Bereich der B-Säule 15 für das Blendenmodul 10 dergestalt, daß das Blendenmodul 10 am Rahmenverstärkungsteil 27 des Fensterrahmens 5 durch mehrere Clipsverbindungen 28 befestigt ist. Die Befestigung des Blendenmoduls 10 am Rahmenverstärkungsteil 27 bedarf im übrigen bei diesem Ausführungsbeispiel noch genauerer Betrachtung. Das Rahmenverstärkungsteil 27 ist hier durch ein Einsatzteil 35 ergänzt und verstärkt worden, das die Öffnungen 36 trägt, in denen die Clipsverbindungen 28 verankert werden können. Im konkreten Ausführungsbeispiel kann man über die Höhe des Rahmenverstärkungsteils 27 insgesamt drei solche Öffnungen 36 für drei Clipsverbindungen 28 vorsehen. Das Einsatzteil 35 wird im dazu U-förmig vorbereiteten Rahmenverstärkungsteil 27 eingeschweißt. Nach unten abgestellte Stützfüße 37 bilden eine sichere Aufnahme für die Positionierung bei Herstellung der Schweißverbindung.

Die dargestellte Gestaltung des Blendenmoduls 10 zeigt unterschiedliche Konturen in unterschiedlichen Abschnitten des Fensterrahmens 5, so daß sich für das Blendenmodul 10 die Herstellung als Kunststoff-Spritzgußteil aus entsprechend kraftfahrzeugtypischem, witterungsbeständigem und verformungsbeständigem Kunststoff empfiehlt.

Eine weitere Ausgestaltung der erfindungsgemäßen Leichtbautür ist ferner dadurch gekennzeichnet, daß als ein Anbauteil eine als Kunststoff-Formteil, insbesondere als Kunststoff-Spritzgußteil ausgeführte Dachrahmenblende 11 von innen am Fensterrahmen 5 angebracht ist, dergestalt, daß die Metallfläche des den Fensterrahmen 5 bildenden Leichtmetallprofils eng anliegend abgedeckt ist. In Fig. 1 ist die Anbringung der Dachrahmenblende 11 als weiteres Anbauteil von innen am Fensterrahmen 5 angedeutet, Fig. 2 und Fig. 3 zeigen Details der Dachrahmenblende 11. Unter Nutzung der Eigenelastizität der als Kunststoff-Formteil ausgeführten Dachrahmenblende 11 in Verbindung mit der verwirklichten Hinterhakungstechnik ist vorgesehen, daß die Dachrahmenblende 11 das den Fensterrahmen 5 bildende Leichtmetallprofil unter Eigenelastizität bogenförmig umfaßt und an einem Rand mittels einer dort ausgebildeten Hakenleiste 29 oder einer Reihe von dort ausgebildeten, beabstandeten Rasthaken in der Aufnahmenut 7 befestigt ist. Man erkennt wie sich die Dachrahmenblende 11 um die freien Flächen des den Fensterrahmen 5 bildenden Leichtmetallprofils schmiegt und eine optimale Abdekkung der Metallflächen des Fensterrahmens 5 nach innen zum Innenraum des Kraftfahrzeugs hin bildet. Zur weiteren Fixierung der Dachrahmenblende 11 am Fensterrahmen 5 ist vorgesehen, daß die Dachrahmenblende 11 einen gegenüberliegenden Rand der Aufnahmenut 6 hakenartig umfaßt. Man erkennt dies gut in Fig. 2 und Fig. 3. Dieser Rand der Dachrahmenblende 11 wird hier von der Hauptdichtung 9, die in der Aufnahmenut 6 sitzt, überdeckt und zusätzlich fixiert.

Fig. 1 läßt erkennen, daß im dargestellten Ausführungsbeispiel in die Dachrahmenblende 11 eine Abdeckung 30 für das Spiegeldreieck 26 integriert ist.

Die Fig. 2 und 3 machen ferner eine Besonderheit des dargestellten Ausführungsbeispiels deutlich, die dadurch gekennzeichnet ist, daß die Fensterführungsdichtung 21 eine die Aufnahmenut 7 überdeckende, auf eine an der Dachrahmenblende 11 ausgebildete Übergangsleiste 31 übergehende Lippe 32 aufweist.

Von besonderem Interesse ist die richtige Dimensionierung der Aufnahmenut 7, im dargestellten Ausführungsbeispiel also der zweiten Aufnahmenut 7 neben der Aufnahmenut 6 für die Hauptdichtung 9. Die Aufnahmenut 7 ist so dimensioniert, daß die Rastleiste 29 der Dachrahmenblende 11 die Spannklammern 24 des Blendenmoduls 10 in der Aufnahmenut 7 gegen Herausfallen fixiert. Tatsächlich ist es dabei so, daß die beiden Elemente sich gegenseitig gegen Herausrutschen aus der Aufnahmenut 7 fixieren. Abgedeckt wird der gesamte Anbringungsbereich durch die Lippe 32 an der Fensterführungsdichtung 21.

Fig. 3 läßt den Bereich des Fensterrahmens 5 an der B-Säule 15 mit der B-Säulen-Blende 20 erkennen. Dort, wo der Fensterrahmen 5 zur Innenseite der Kraftfahrzeugkarosserie gewandt ist, kann man einen die Aufnahmenut 6 bildenden Rand 33 erkennen. Dieser Rand 33 liegt wie auch der gegenüberliegende Rand im Türkasten 1 an einer Stelle, wo eine Halterung der Hauptdichtung 9 nicht mehr erforderlich ist, sondern ein Schloßblech unmittelbar anschmiegend verlaufen soll. Hier soll der Einlauf des Fensterrahmens 5 in das Blech des Schloßträgers erfolgen. Ab hier müssen der Rand 33 und die Aufsteckleiste 8 ausgeklinkt sein. Dazu ist hier nach bevorzugter Lehre vorgesehen, daß dieser Rand 33 von der benachbarten Kante 34 des den Fensterrahmen 5 bildenden Leichtmetallprofils zurückversetzt ist, wobei diese Kante 34 mit einem zu der Wandstärke des Profilmaterials passenden Radius abgerundet ist. Das macht insbesondere Fig. 3 gut deutlich. Wird der Rand 33 hier ausgeklinkt, so verbleibt praktisch kein Grat, jedenfalls ist ein Grat von der Kante 34 zurückversetzt und behindert nicht eine satte und optimal verlaufende Anlage des Schloßblechs bzw. der Türinnenwandung im Bereich der Kante 34.

Fig. 1 macht schließlich ein bevorzugtes Herstellungsverfahren für eine erfindungsgemäße Leichtbautür deutlich, das dadurch gekennzeichnet ist, bei bereits am Türkasten 1 fest angebrachtem Fensterrahmen 5 in einem ersten Verfahrensschritt die Hauptdichtung 9 am Türkasten 1 und am Fensterrahmen 5 angebracht wird, in einem zweiten Verfahrensschritt die Dachrahmenblende 11 am Fensterrahmen 5 angebracht und festgeclipst wird, in einem dritten Verfahrensschritt das Blendenmodul 10 in den Türkasten 1 eingesteckt wird und in einem vierten Verfahrensschritt das Blendenmodul 10 am Fensterrahmen 5 bei bereits dort befestigter Dachrahmenblende 11 mit Spannklammern 24 in der Aufnahmenut 7 sowie am Rahmenverstärkungsteil 27 mit Clipsverbindungen 28 festgeklemmt wird.

## Patentansprüche

1. Leichtbautür für Kraftfahrzeuge
mit einem Türkasten (1), der nach oben zur Fensterfläche hin durch innere und äußere Fensterschachtprofile (3; 4) begrenzt ist, und mit einem die Fensterfläche umschließenden, mit dem Türkasten (1), insbesondere mit dem inneren Fensterschachtprofil (3), dauerhaft verbundenen, insbesondere verschweißten Fensterrahmen (5) aus Leichtmetall/Leichtmetallegierungen, insbesondere Aluminium/Aluminiumlegierungen,
wobei der Fensterrahmen (5) als stranggepreßtes und gebogenes, insbesondere streckgebogenes Leichtmetallprofil ausgeführt ist,
**dadurch gekennzeichnet,**
**daß** an dem den Fensterrahmen (5) bildenden Leichtmetallprofil mindestens eine dem Profilverlauf folgende, im wesentlichen durchgehende Aufnahmenut (6; 7) und/oder mindestens eine dem Profilverlauf folgende, im wesentlichen durchgehende Aufsteckleiste (8) ausgebildet ist, die zur Aufnahme, Anbringung oder Anbindung eines Anbauteils (9; 10; 11; 27) dient, **daß** das den Fensterrahmen (5) bildende Leichtmetallprofil eine geschlossene Hohlkammer (12) aufweist, an der außen die Aufnahmenut (6; 7) und/oder die Aufsteckleiste (8) ausgebildet ist bzw. sind und daß als ein Anbauteil ein als Kunststoff-Formteil ausgeführtes Blendenmodul (10) von außen am Fensterrahmen (5) angebracht ist, wobei im Blendenmodul (10) einstückig äußere Blenden (19; 20) am Dachrahmen (13) und an der B-Säule (15) ausgebildet sind und am Blendenmodul (10) zumindest eine Fensterführungsdichtung (21) angebracht ist.

2. Leichtbautür nach Anspruch 1, **dadurch gekennzeichnet, daß** am Blendenmodul (10) auch eine äußere Fensterschachtdichtung (22) angebracht ist und/oder
das Blendenmodul (10) im Querschnitt als ein U-Profil mit anschließendem L-Profil gestaltet ist.

3. Leichtbautür nach Anspruch 1 oder 2, **dadurch gekennzeichnet, daß** das Blendenmodul (10) zur Anbringung am Fensterrahmen (5) mit einer Abstützfläche (23) an einer Anlagefläche des den Fensterrahmen (5) bildenden Leichtmetallprofils anliegt und mit Hilfe einer Mehrzahl von mit Abstand voneinander angeordneter Spannklammern (24) in der Aufnahmenut (7) befestigt ist, wobei, vorzugsweise,
die Spannklammern (24) als Metall-Federklammern ausgeführt sind.

4. Leichtbautür nach einem der Ansprüche 1 bis 3, **dadurch gekennzeichnet, daß** das Blendenmodul (10) mit einer Aufsteckaufnahme, insbesondere unter Zwischenlage einer Dichtung (17), auf die Aufsteckleiste (8) aufgesteckt ist und/oder
daß das Blendenmodul (10) mit in den Türkasten (1) einsteckbaren, das Fensterschachtprofil (4) nach unten überragenden Verlängerungen von Fensterführungen (25) versehen ist und/oder
daß in das Blendenmodul (10) ein Spiegeldreieck (26) integriert ist.

5. Leichtbautür nach einem der Ansprüche 1 bis 4, **dadurch gekennzeichnet, daß** der Fensterrahmen (5) an der der B-Säule (15) der Kraftfahrzeugkarosserie zugewandten Seite durch ein langgestrecktes Rahmenverstärkungsteil (27) verstärkt ist., wobei, vorzugsweise
das Rahmenverstärkungsteil (27) als Preßteil oder Tiefziehteil aus Leichtmetall/Leichtmetallegierungen, insbesondere Aluminium/Aluminiumlegierungen ausgeführt und mit dem Fensterrahmen (5) durch Schweißung oder auf andere Weise fest verbunden ist.

6. Leichtbautür nach einem der Ansprüche 1 bis 4 sowie Anspruch 5, **dadurch gekennzeichnet, daß** das Blendenmodul (10) am Rahmenverstärkungsteil (27) des Fensterrahmens (5) durch mehrere Clipsverbindungen (28) befestigt ist.

7. Leichtbautür nach einem der vorhergehenden Ansprüche, **dadurch gekennzeichnet, daß** der Türkasten (1) einen im wesentlichen U-förmigen Tragrahmen aufweist, vorzugsweise ausgeführt einteilig aus einem Blech mit minimaler Blechdicke aus Leichtmetall/Leichtmetallegierungen, insbesondere aus Aluminium/ Aluminiumlegierungen, als Preßteil oder Tiefziehteil.

8. Leichtbautür nach einem der vorhergehenden Ansprüche, **dadurch gekennzeichnet, daß** eine T-förmige Dichtungs-Aufnahmenut (6) zur Anbringung einer türseitigen Hauptdichtung (9) als ein Anbauteil vorgesehen ist.

9. Leichtbautür nach einem der vorhergehenden Ansprüche, **dadurch gekennzeichnet, daß** eine T-förmige Anbauteil-Aufnahmenut (7) zur Anbringung von Befestigungselementen von Anbauteilen (10; 11) vorgesehen ist, wobei, vorzugsweise, die Anbauteil-Aufnahmenut (7) schräg gegenüber der Dichtungs-Aufnahmenut (6) angeordnet ist, sofern eine solche vorhanden ist.

10. Leichtbautür nach einem der vorhergehenden Ansprüche, **dadurch gekennzeichnet, daß** eine Aufsteckleiste (8) vorgesehen ist, insbesondere zum Aufstecken einer zusätzlichen Dichtung (17), wobei, vorzugsweise, die Aufsteckleiste (8) etwa rechtwinklig abgewinkelt von der Dichtungs-Aufnahmenut (6) für die Hauptdichtung (9) abragt, sofern eine solche vorhanden ist.

11. Leichtbautür nach einem der vorhergehenden Ansprüche, **dadurch gekennzeichnet, daß** als ein Anbauteil eine als Kunststoff-Formteil, insbesondere als Kunststoff-Spritzgußteil ausgeführte Dachrahmenblende (11) von innen am Fensterrahmen (5) angebracht ist, insbesondere dergestalt, daß die Metallfläche des den Fensterrahmen (5) bildenden Leichtmetallprofils eng anliegend abgedeckt ist, wobei vorzugsweise,
die Dachrahmenblende (11) das den Fensterrahmen (5) bildende Leichtmetallprofil bogenförmig umfaßt und an einem Rand mittels einer dort ausgebildeten Hakenleiste (29) oder einer Reihe von dort ausgebildeten, beabstandeten Rasthaken in der Aufnahmenut (7) befestigt ist, wobei, weiter vorzugsweise,
die Dachrahmenblende (11) einen gegenüberliegenden Rand der Aufnahmenut (6) hakenartig umfaßt.

12. Leichtbautür nach den Ansprüchen 4 und 11, **dadurch gekennzeichnet, daß** in die Dachrahmenblende (11) eine Abdeckung (30) für das Spiegeldreieck (26) integriert ist.

13. Leichtbautür nach Anspruch 11 und ggf. Anspruch 12, **dadurch gekennzeichnet, daß** die Fensterführungsdichtung (21) eine die Aufnahmenut (7) überdeckende, auf eine an der Dachrahmenblende (11) ausgebildete Übergangsleiste (31) übergehende Lippe (32) aufweist.

14. Leichtbautür nach den Ansprüchen 3 und 11 sowie ggf. Anspruch 12 oder 13, **dadurch gekennzeichnet, daß** die Hakenleiste (29) der Dachrahmenblende (11) die Spannklammern (24) des Blendenmoduls (10) in der Aufnahmenut (7) gegen Herausfallen fixiert.

15. Leichtbautür nach einem der vorhergehenden Ansprüche, **dadurch gekennzeichnet, daß** ein die Aufnahmenut (6) bildender Rand (33) und/oder eine Aufsteckleiste (8) abschnittsweise ausgeklinkt sind und daß dieser Rand (33) bzw. diese Aufsteckleiste (8) von einer benachbarten Kante (34) des den Fensterrahmen (5) bildenden Leichtmetallprofils zurückversetzt ist, wobei diese Kante (34) mit einem zu der Wandstärke des Profilmaterials passenden Radius abgerundet ist.

16. Verfahren zur Herstellung einer Leichtbautür für Kraftfahrzeuge nach den Ansprüchen 8, 9 und 11, **dadurch gekennzeichnet, daß** bei bereits am Türkasten (1) fest angebrachtem Fensterrahmen (5)
in einem ersten Verfahrensschritt die Hauptdichtung (9) am Türkasten (1) und am Fensterrahmen (5) angebracht wird,
in einem zweiten Verfahrensschritt die Dachrahmenblende (11) am Fensterrahmen (5) angebracht und festgeclipst wird,
in einem dritten Verfahrensschritt das Blendenmodul (10) in den Türkasten ( 1 ) eingesteckt wird und
in einem vierten Verfahrensschritt das Blendenmodul (10) am Fensterrahmen (5) bei bereits dort befestigter Dachrahmenblende (11), vorzugsweise mit Spannklammern (24) in der Anbauteil- Aufnahmenut (7) sowie mit Clipsverbindungen (28) am Rahmenverstärkungsteil (27) festgeklemmt wird.

## Claims

1. A lightweight door for motor vehicles,
with a door casing (1), the upper section of which is delimited toward the window surface by inner and outer window shaft profiles (3; 4), and with a window frame (5) made of light metal/light metal alloys, particularly aluminium/aluminium alloys, that encloses the window surface and is permanently attached, particularly welded, to the door casing (1), particularly to the inner window shaft profile (3),
wherein the window frame (5) is realized in the form of an extruded and bent, particularly a stretch-bent, light metal profile,
**characterized in that**
at least one essentially continuous receptacle groove (6; 7) following the profile progression and/or at least one essentially continuous clip-on strip (8) following the profile progression is provided on the light metal profile forming the window frame (5) and serves for receiving, attaching or connecting an add-on part (9; 10; 11; 27),
the light metal profile forming the window frame (5) contains a closed hollow chamber (12), on the outside of which the receptacle groove (6; 7) and/or the clip-on strip (8) is or are arranged, and
an add-on part consists of a panel module (10) that is realized in the form of a moulded plastic part and arranged on the outside of the window frame (5),
wherein outer panels (19; 20) are integrally formed onto the roof frame (13) and onto the B pillar (15) in the panel module (10) and at least one window guide seal (21) is attached to the panel module (10).

2. The lightweight door as claimed in claim 1, **characterized in that**
an outer window shaft seal (22) is also attached to the panel module (10) and/or
the panel module (10) has the cross section of a U-profile with an adjacent L-profile.

3. The lightweight door as claimed in claim 1 or 2, **characterized in that**
the panel module (10) for being attached to the window frame (5) rests on a support surface of the light metal profile forming the window frame (5) with a support surface (23) and is mounted in the receptacle groove (7) by means of a plurality of clamps (24) that are spaced apart from one another, wherein the clamps (24) are preferably realized in the form of metal spring clamps.

4. The lightweight door as claimed in any one of claims 1 to 3, **characterized in that**
the panel module (10) is attached to the clip-on strip (8) with a clip-on receptacle, particularly with an seal (17) arranged in between, and/or
the panel module (10) is provided with extensions of window guides (25) that can be inserted into the door casing (1) and project downwards over the window shaft profile (4) and/or
a mirror triangle (26) is integrated into the panel module (10).

5. The lightweight door as claimed in any one of claims 1 to 4, **characterized in that**
the window frame (5) is reinforced on the side facing the B pillar (15) of the motor vehicle body by means of an elongated frame-reinforcing part (27),
wherein preferably the frame-reinforcing part (27) is realized in the form of a pressed part or deep-drawn part made of light metal/light metal alloys, particularly of aluminium/aluminium alloys, and rigidly connected to the window frame (5) by means of welding or another method.

6. The lightweight door as claimed in any one of claims 1 to 4 and claim 5, **characterized in that**
the panel module (10) is mounted on the frame-reinforcing part (27) of the window frame (5) by means of several clip connections (28).

7. The lightweight door as claimed in any one of the preceding claims, **characterized in that**
the door casing (1) has an essentially U-shaped supporting frame that is preferably realized in the form of a pressed part or deep-drawn part manufactured in one-piece from a panel with minimal panel thickness that is made of light metal/light metal alloys, particularly of aluminium/aluminium alloys.

8. The lightweight door as claimed in any one of the preceding claims, **characterized in that**
a T-shaped seal receptacle groove (6) is provided for attaching an add-on part in the form of a main seal (9) on the door side.

9. The lightweight door as claimed in any one of the preceding claims, **characterized in that**
a T-shaped add-on part receptacle groove (7) is provided for attaching mounting elements of add-on parts (10; 11),
wherein, preferably, the add-on part receptacle groove (7) is arranged obliquely relative to the seal receptacle groove (6) if such a groove is provided.

10. The lightweight door as claimed in any one of the preceding claims, **characterized in that**
a clip-on strip (8) is provided, particularly for attaching an additional seal (17),
wherein, preferably, the clip-on strip (8) projects at an approximate right angle from the seal receptacle groove (6) for the main seal (9) if such a groove is provided.

11. The lightweight door as claimed in any one of the preceding claims, **characterized in that**
an add-on part consisting of a roof frame panel (11) in the form of a moulded part, particularly an injection-moulded plastic part, is attached from the inside to the window frame (5), particularly such that the metal surface of the light metal profile forming the window frame (5) is tightly covered,
wherein, preferably, the roof frame panel (11) encloses the light metal profile forming the window frame (5) in an arc-shaped fashion and is mounted in the receptacle groove (7) on one edge by means of a hook strip (29) formed thereon or a series of spaced-apart hooks formed there,
wherein, further preferably, the roof frame panel (11) encloses an opposing edge of the receptacle groove (6) in a hook-like fashion.

12. The lightweight door as claimed in claims 4 and 11, **characterized in that**
a cover (30) for the mirror triangle (26) is integrated into the roof frame panel (11).

13. The lightweight door as claimed in claim 11 and, if applicable, claim 12, **characterized in that**
the window guide seal (21) has a lip (32) that covers the receptacle groove (7) and transforms into a transition strip (31) formed on the roof frame panel (11).

14. The lightweight door as claimed in claims 3 and 11 and, if applicable, claim 12 or 13, **characterized in that**
the hook strip (29) of the roof frame panel (11) fixes the clamps (24) of the panel module (10) in the receptacle groove (7) from falling out.

15. The lightweight door as claimed in any one of the preceding claims, **characterized in that**
an edge (33) forming the receptacle groove (6) and/or a clip-on strip (8) are sectionally notched,
and this edge (33) or this clip-on strip (8) is set back relative to an adjacent edge (34) of the light metal profile forming the window frame (5),
wherein this edge (34) is rounded with a suitable radius for the wall thickness of the profile material.

16. A method for manufacturing a lightweight door for motor vehicles as claimed in claims 8, 9 and 11, **characterized in that**,
with the window frame (5) already being rigidly attached to the door casing (1),
the main seal (9) is attached to the door casing (1) and to the window frame (5) in a first procedural step,
the roof frame panel (11) is attached and firmly clipped to the window frame (5) in a second procedural step,
the panel module (10) is inserted into the door casing (1) in a third procedural step and
in a fourth procedural step the panel module (10) is rigidly clamped to the window frame (5) with the roof frame panel (11) already mounted thereon, preferably with clamps (24) in the add-on part receptacle groove (7) and with clip connections (28) on the frame-reinforcing part (27).

## Revendications

1. Porte légère pour véhicules à moteur,
comportant un battant de porte (1), qui est délimité vers le haut sur la surface de la fenêtre par des profilés de montant de porte (3;4) intérieur et extérieur et comportant un châssis de fenêtre (5) en métal léger/alliages de métaux légers, notamment en aluminium/alliages d'aluminium, entourant la surface de la fenêtre, relié de manière durable, notamment soudé au battant de porte (1), notamment au profilé de montant de fenêtre (3) intérieur,
dans lequel le châssis de fenêtre (5) est configuré comme un profilé de métal léger extrudé et plié, notamment formé par allongement,
**caractérisée en ce que**,
sur le profilé de métal léger formant le châssis de fenêtre (5), au moins une rainure (6 ;7) suivant le cours du profilé, essentiellement ininterrompue et/ou au moins une baguette de fixation (8) suivant le cours du profilé, essentiellement ininterrompue est réalisée, laquelle sert à recevoir, monter ou lier une pièce de montage (9;10;11;27), le profilé de métal léger formant le châssis de fenêtre (5) présente une chambre creuse fermée, à l'extérieur de laquelle la rainure (6 ;7) et/ou la baguette de fixation (8) est, respectivement sont réalisées et, comme pièce de montage, un module de vitres (10) configuré comme une pièce usinée en plastique est monté sur l'extérieur du châssis de fenêtre (5), moyennant quoi, dans le modules de vitres (10), des vitres extérieures (19 ;20) sont réalisées sur un châssis de toit (13) et sur les montants B (15) et au moins un joint d'étanchéité d'encadrement de fenêtre (21) est monté sur le modules de vitres (10).

2. Porte légère selon la revendication 1, **caractérisée en ce que** un joint d'étanchéité de montant de fenêtre (22) extérieur est également monté sur le modules de vitres (10) et/ou
la section transversale du modules de vitres (10) a la forme d'un profilé en U suivi par un profilé en L.

3. Porte légère selon la revendication 1 ou 2,
**caractérisée en ce que** le module de vitres (10) repose, lors du montage sur le châssis de fenêtre (5) par une surface d'appui (23) sur une surface de contact du profilé de métal léger formant le châssis de fenêtre (5) et est fixé dans la rainure (7) à l'aide d'une pluralité d'agrafes de fixation (24) espacées les unes des autres, moyennant quoi, de préférence, les agrafes de fixation (24) sont configurées comme des agrafes élastiques en métal.

4. Porte légère selon une des revendications 1 à 3, **caractérisée en ce que** le module de vitres (10) est enfoncé sur la baguette de fixation (8) au moyen d'une rainure, notamment par l'intermédiaire d'un joint d'étanchéité (17) et/ou
le module de vitres (10) est pourvu de rallonges des encadrements de fenêtre (25) s'enfichant dans le battant de porte (1), saillant du profilé de montant de fenêtre (4) vers le bas et/ou
un miroir triangulaire (26) est intégré au module de vitres (10).

5. Porte légère selon une des revendications 1 à 4, **caractérisé en ce que** le châssis de fenêtre (5) est renforcé sur le montant B (15) de la carrosserie du véhicule à moteur par une pièce de renforcement de châssis (27) allongée, dans lequel, de préférence,
la pièce de renforcement de châssis (27) est configurée comme une pièce pressée ou emboutie en métal léger/alliages de métaux légers, notamment en aluminium/ alliages d'aluminium et reliée solidement au châssis de fenêtre (5) par soudure ou d'une autre manière.

6. Porte légère selon une des revendications 1 à 4, ainsi que selon la revendication 5, **caractérisée en ce que** le module de vitres (10) est fixé à la pièce de renforcement de châssis (27) du châssis de fenêtre (5) par plusieurs clips (28).

7. Porte légère selon une des revendications précédentes, **caractérisée en ce que** le battant de porte (1) présente un châssis de support essentiellement en forme de U, de préférence configuré en un seul bloc à partir d'un feuillard ayant une épaisseur de feuillard minimale en métal léger/ alliages de métaux légers, notamment en aluminium/ alliages d'aluminium, comme une pièce fabriquée par pressage ou emboutissage.

8. Porte légère selon une des revendications précédentes, **caractérisée en ce que** la rainure du joint d'étanchéité (6) en forme de T est prévue pour monter un joint d'étanchéité principal (9) du côté de la porte comme une pièce de montage.

9. Porte légère selon une des revendications précédentes, **caractérisée en ce qu'**une rainure de pièce de montage (7) en forme de T est prévue pour fixer des éléments de fixation de pièces de montage (10 ;11), dans lequel, de préférence, la rainure de pièce de montage (7) est disposée de l'autre côté de la rainure de joint d'étanchéité (6), si cette dernière est présente.

10. Porte légère selon une des revendications précédentes, **caractérisée en ce qu'**une baguette de fixation (8) est prévue, notamment pour fixer un joint d'étanchéité (17) supplémentaire, dans laquelle, de préférence, la baguette de fixation (8) saille à un angle approximativement droit en se détournant de la rainure de joint d'étanchéité (6) du joint d'étanchéité principal (9), si cette dernière est présente.

11. Porte légère selon une des revendications précédentes, **caractérisée en ce qu'**une pièce de montage d'une vitre de châssis de toit (11), configurée comme une pièce usinée en plastique, notamment comme une pièce en plastique moulée par injection, est montée sur l'intérieur du châssis de fenêtre (5), notamment de façon à ce que la surface métallique du profilé de métal léger formant le châssis de fenêtre (5) soit recouverte étroitement, dans lequel de préférence,
la vitre de châssis de toit (11) englobe sous la forme d'un arc le profilé de métal léger qui forme le châssis de fenêtre (5) et est fixée par un bord au moyen d'une barre à crochets (29) réalisée à cet endroit ou d'une rangée de doigts de verrouillage espacés, réalisés à cet endroit, dans lequel, de manière encore préférée, la vitre de châssis de toit (11) englobe au moyen de crochets un bord en vis-à-vis de la rainure.

12. Porte légère selon les revendications 4 à 11, **caractérisée en ce qu'**un couvercle (30) du miroir triangulaire (26) est intégré à la vitre de châssis de toit (11).

13. Porte légère selon la revendication 11 et, le cas échéant, la revendication 12, **caractérisée en ce que** le joint d'étanchéité de l'encadrement de fenêtre (21) présente une lèvre (32) recouvrant la rainure (7), passant par dessus une baguette de transition (32) réalisée sur la vitre de châssis de toit (11).

14. Porte légère selon les revendications 3 et 11 et, le cas échéant, la revendication 12 et 13, **caractérisée en ce que** la barre à crochets (29) de la vitre de châssis de toit (11) fixe les agrafes de fixation (24) du module de vitres (10) dans la rainure (7) de manière à empêcher qu'elles ne tombent.

15. Porte légère selon une des revendications précédentes, **caractérisée en ce que** des sections d'un bord (33) formant la rainure (6) et/ou d'une baguette de fixation (8) portent des encoches et ledit bord (33), respectivement ladite baguette de fixation (8) est replacé par une arête (34) voisine du profilé de métal léger formant le châssis de fenêtre (5), dans lequel ladite arête (34) est arrondie à un rayon correspondant à une des épaisseurs de paroi du matériau de profilé.

16. Procédé de fabrication d'une porte légère pour véhicules à moteur selon les revendications 9 et 11, **caractérisé en ce que**, après avoir solidement monté le châssis de fenêtre (5) sur le battant de porte (1), le joint d'étanchéité principal (9) est monté sur le battant de porte (1) et sur le châssis de fenêtre (5) à une première étape de procédé, la vitre de châssis de toit (11) est montée et agrafée solidement sur le châssis de fenêtre (5) à une deuxième étape de procédé, le module de vitres (10) est inséré dans le battant de porte (1) à une troisième étape de procédé et, à une quatrième étape de procédé, le module de vitres (10) est fixé au châssis de fenêtre (5)sur la vitre de châssis de toit (11) déjà fixée à cet endroit, de préférence à l'aide d'agrafes de fixation (24) dans la rainure (7) de la pièce de montage ainsi qu'à l'aide de clips (28) au niveau de la pièce de renforcement de châssis (27).
